(19) Europäisches Patentamt
European Patent Office
Office européen des brevets

(11) **EP 4 409 365 B1**

(12) **EUROPEAN PATENT SPECIFICATION**

(45) Date of publication and mention
of the grant of the patent:
**15.04.2026 Bulletin 2026/16**

(21) Application number: **22797483.9**

(22) Date of filing: **29.09.2022**

(51) International Patent Classification (IPC):
**G05B 13/04** *(2006.01)* **G05B 11/36** *(2006.01)*
**G05B 6/02** *(2006.01)*

(52) Cooperative Patent Classification (CPC):
**G05B 6/02; G05B 11/36**

(86) International application number:
**PCT/IB2022/059287**

(87) International publication number:
**WO 2023/053055 (06.04.2023 Gazette 2023/14)**

(54) **COMPUTATION OF AN OPTIMAL REFERENCE FOR AN INTEGRAL ELECTRONIC CONTROLLER IN A CLOSED-LOOP ELECTRONIC CONTROL SYSTEM**

BERECHNUNG EINES OPTIMALEN SOLLWERTS FÜR EINEN ELEKTRONISCHEN REGLER MIT INTEGRIERGLIED IN EINEM ELEKTRONISCHEN REGELSYSTEM MIT GESCHLOSSENEM REGELKREIS

CALCUL D'UNE RÉFÉRENCE OPTIMALE POUR UNE COMMANDE ÉLECTRONIQUE À ACTION INTÉGRALE DANS UN SYSTÈME DE COMMANDE ÉLECTRONIQUE EN BOUCLE FERMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2021 IT 202100025079**

(43) Date of publication of application:
**07.08.2024 Bulletin 2024/32**

(73) Proprietor: **C.R.F. Società Consortile per Azioni**
**10043 Orbassano (TO) (IT)**

(72) Inventors:
• **DESSI', Riccardo**
**10043 Orbassano (TO) (IT)**
• **RAFFONE, Enrico**
**10043 Orbassano (TO) (IT)**
• **REI, Claudio**
**10043 Orbassano (TO) (IT)**
• **FOSSANETTI, Massimo**
**10043 Orbassano (TO) (IT)**

(74) Representative: **Studio Torta S.p.A.**
**Via Viotti, 9**
**10121 Torino (IT)**

(56) References cited:
**US-A1- 2019 292 998 US-A1- 2020 341 442**

• **ZHAN JUNXIANG ET AL: "A Dual Closed-loop Longitudinal Speed Controller Using Smooth Feedforward and Fuzzy Logic for Autonomous Driving Vehicles", 2021 IEEE INTERNATIONAL INTELLIGENT TRANSPORTATION SYSTEMS CONFERENCE (ITSC), IEEE, 19 September 2021 (2021-09-19), pages 545 - 552, XP033993238, DOI: 10.1109/ITSC48978.2021.9564479**
• **"PID Controllers: Theory, Design, and Tuning", 1 January 1995, INSTRUMENT SOCIETY OF AMERICA, Research Triangle Park, North Carolina, article KARL JOHAN ASTRÖM ET AL: "PID Control", pages: 59 - 119, XP055216477**

**Description**

## CROSS-REFERENCE TO RELATED APPLICATIONS

This patent application claims priority from Italian patent application no. 102021000025079 filed on September 30, 2021.

## TECHNICAL FIELD OF THE INVENTION

The present invention relates in general to the integral electronic controllers or regulators in closed-loop electronic control systems, and in particular to an innovative integral action desaturation technique, also known as anti-wind-up technique, based on the computation of optimal references for the electronic controllers on the basis of the saturation limits of the actuators present in the closed-loop electronic control systems, so as to linearise the output commands of the electronic controllers.

The present invention relates more specifically to the control of the longitudinal dynamics of a motor vehicle.

## STATE OF THE ART

As is known, integral controllers in closed-loop electronic control systems are control algorithms which, thanks to their simplicity of use, combined with an appreciable effectiveness in different fields of use, represent the control algorithms by far the most used in the industrial applications.

The success of the integral controllers is mainly due to a remarkable effectiveness in adjusting a wide range of industrial processes (thermal, mechanical, etc., processes), to the possibility of being embodied with different techniques (mechanical, hydraulic, electronic, both analogic and digital, etc.), to the relative calibration simplicity of the operating parameters since their use does not require for the operator to have a detailed knowledge of the process to be controlled, to the good effectiveness/cost ratio because, in the presence of inevitable conditions of noise or of wrong calibrations, the effectiveness of the control law loses effect, thus the use of other more refined control systems would be useless, since their performance would become comparable to those of the integral controllers, and to the flexibility in their use, since they are often used to obtain more articulated configurations so as to meet complex requirements.

From a mathematical viewpoint, integral controllers are dynamic systems which process an input signal $e(t)$, called error, obtained as difference between a reference $r(t)$ and a controlled variable $y(t)$, i.e., $e(t) = r(t) - y(t)$, providing an output control signal $u(t)$.

The integral controllers may assume two different configurations: a PID configuration, acronym for Proportional-Integrative-Derivative, and a PI configuration, acronym for Proportional-Integrative, *i.e.,* without derivative action.

The proportional action provides a contribution to the output $u(t)$ proportional to the input $e(t)$ through a constant $K_P$ called proportional gain; the integral action provides a contribution to the output $u(t)$ proportional to the integral of the input $e(t)$, thus proportional to its mean value, through a constant $K_I$ equal to the inverse of an integral time constant $T_I$, also called reset time, multiplied by the proportional gain $K_P$; and the derivative action provides a contribution to the output $u(t)$ proportional to the derivative of the input $e(t)$, thus proportional to its variation over time, through a constant $K_D$ equal to a derivative time constant $T_D$ multiplied by the proportional gain $K_P$.

The function of the integral action is to eliminate the steady-state error caused by the proportional block, which occurs when dealing with a reference step, whereas the function of the derivative action, keeping into account the rapid variations of the error, is to try anticipating the future corrective action, thus resulting in a reduction in the oscillations of the output $u(t)$ around the value which it has to assume.

The PID configuration is mainly used in slow processes, which do not require immediate responses to the load variations, where the presence of oscillations creates problems, whereas the PI configuration is mainly used in those systems where the load variations take place slowly and a steady-state error of modest entity is required together with a good response rate to the load variations.

It is also known that the actuators used in the control systems have constraints on the output amplitude, which cannot exceed maximum and minimum limits. In fact, an actuator usually has an input/output characteristic having an intermediate linear section and two saturation sections on opposite sides of the linear section and at which the actuator output assumes respective minimum and maximum saturation limits regardless of the input amplitude.

When an integral controller is used, it is possible that the actuator output reaches the maximum and minimum saturation limits and, in such a case, even if the integral action continues to grow also in the presence of a non-null error $e(t)$, the increase fails to produce any effect on the response of the controlled system.

This operating situation, in addition to resulting in the actuator failing to work correctly, makes it ineffective also when the error decreases or has a sign inversion; in fact, the controller return effective only when the actuator output falls within the linear section of its input/output characteristic (discharge of the integral term). This phenomenon is commonly called integral charge or integral wind-up.

The wind-up phenomenon may be remedied through so-called anti-wind-up techniques, *i.e.,* countering the saturation or anti-saturating the actuator output.

A first anti-wind-up technique is known with the abbreviation IMC, acronym for Internal Model Control, since a model of the process to be controlled is required; the model of the process to be controlled is within the controller and the controller uses the model of the process to be controlled for improving the performance. Essentially, this anti-wind-up technique bases its operation on the assumption of knowing the process to be controlled, so as to be able to obtain a copy thereof and integrate it in the controller.

A second anti-wind-up technique, known as clamping technique, consists in desaturating the actuator outputs through the interruption of the integral action as soon as the output *u(t)* of the controller reaches the saturation level of the actuator (clamping).

A third anti-wind-up technique, known as back-computation technique, consists instead in back-computing the integral action through the introduction of a term $e_t(t)$ which is equal to the difference between the output *v(t)* of the actuator and the output *u(t)* of the controller, which constitutes the input or the command of the actuator, *i.e.,* $e_t(t) = v(t) - u(t)$ and which is carried back to the input of the integral block and subtracted from the error *e(t)*. By so doing, a null value is obtained, which will thus not affect the control in any way, should the actuator be working within the saturation limits, whereas when these limits are exceeded, a value is generated which helps dampening the growth of the integral action.

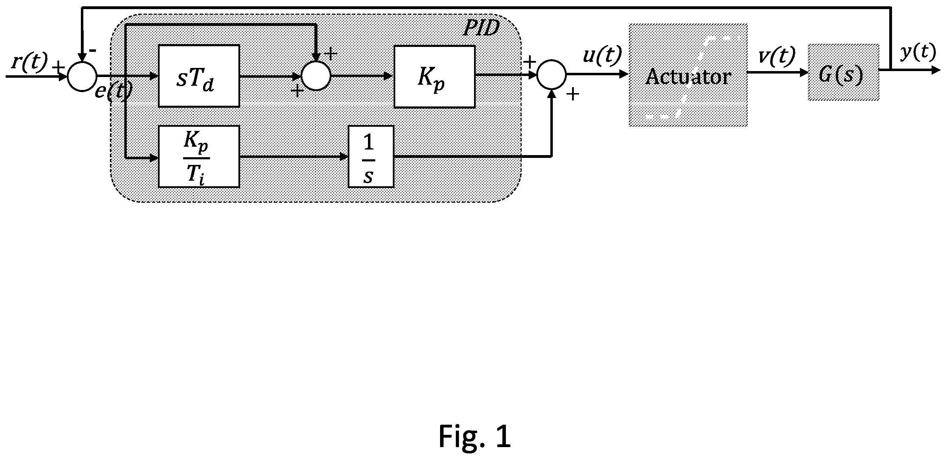

Figure 1 shows a block diagram of a classic automatic electronic control system to control a dynamic system to be closed-loop controlled, identified with its transfer function *G(s),* by means of an actuator, whose input/output characteristic is shown in the relevant block, and comprising an integral controller, in particular a PID one, which controls the actuator.

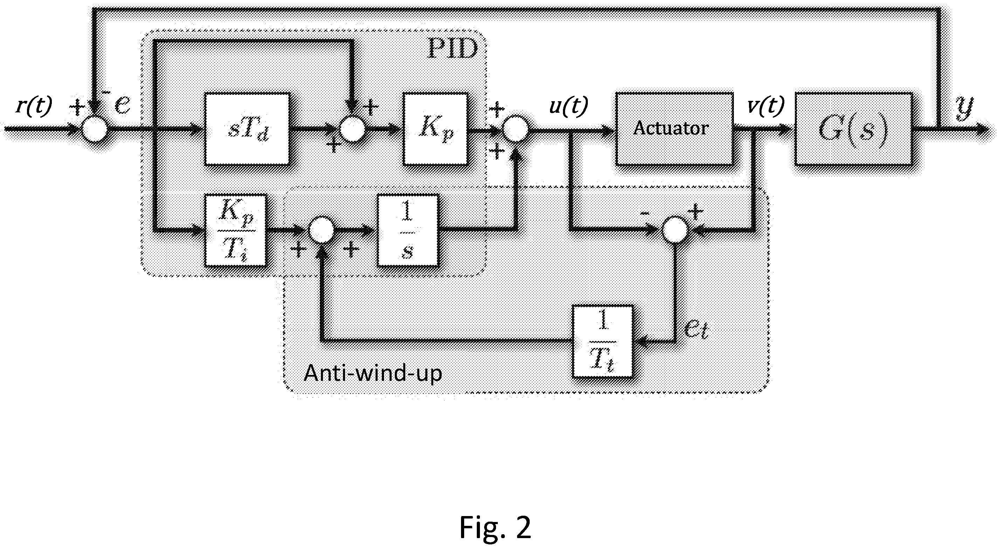

Figure 2 shows a block diagram of an automatic electronic control system which implements the anti-wind-up technique based on the back-computation of the integral term in a PID controller, wherein the anti-wind-up action has effect only when the actuator is saturating and the time constant $T_t$ determines the discharge speed of the integral action.

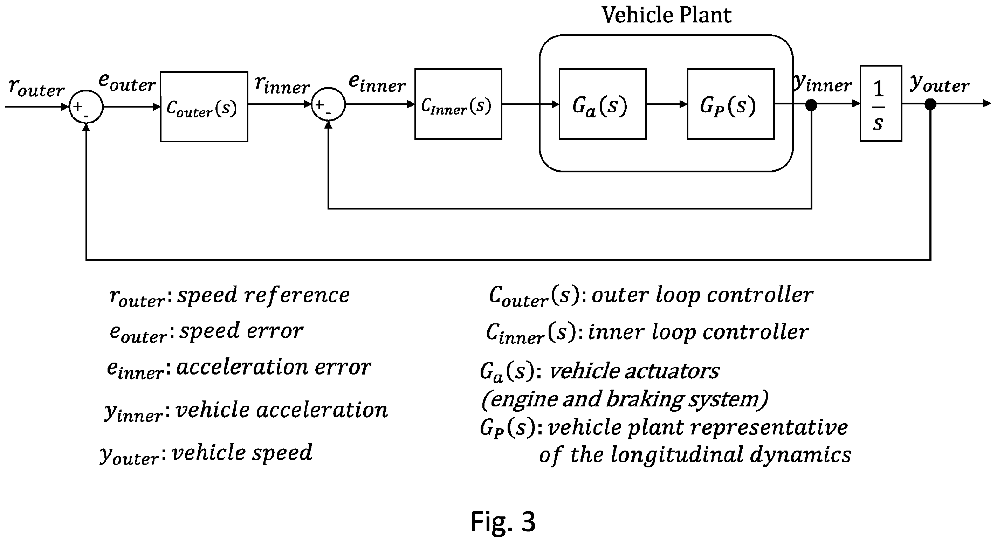

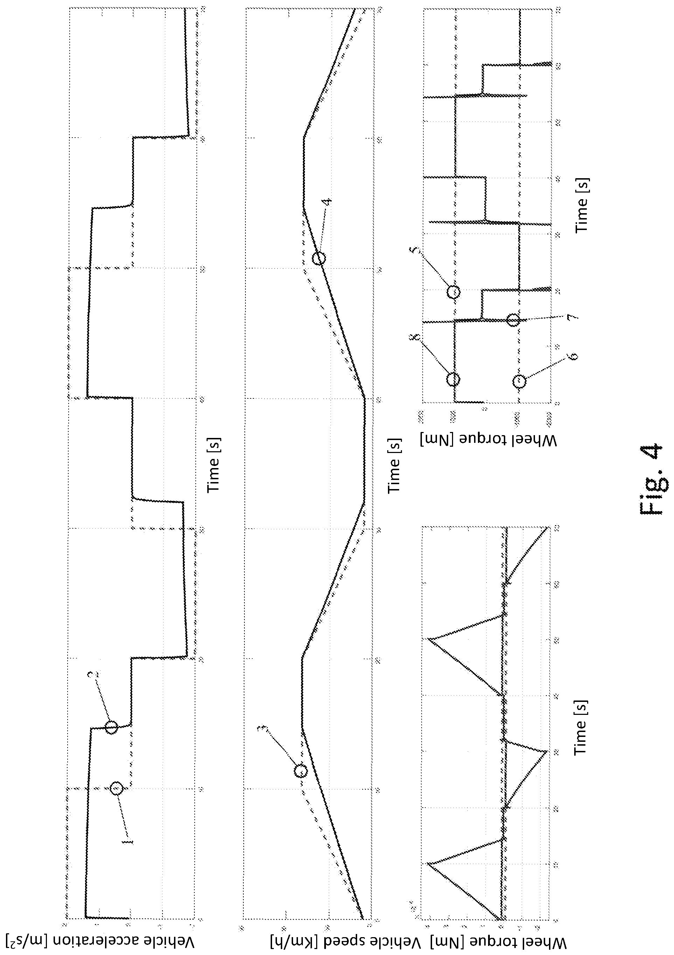

Figures 4, 5, 6, 7 and 8 show developments of automotive quantities obtained by means of a numerical simulation of the block diagrams shown in Figures 1 and 2, *i.e.,* without and with the implementation of the anti-wind-up technique shown in Figure 2, in an automotive context for controlling the longitudinal dynamics of a motor vehicle shown in Figure 3

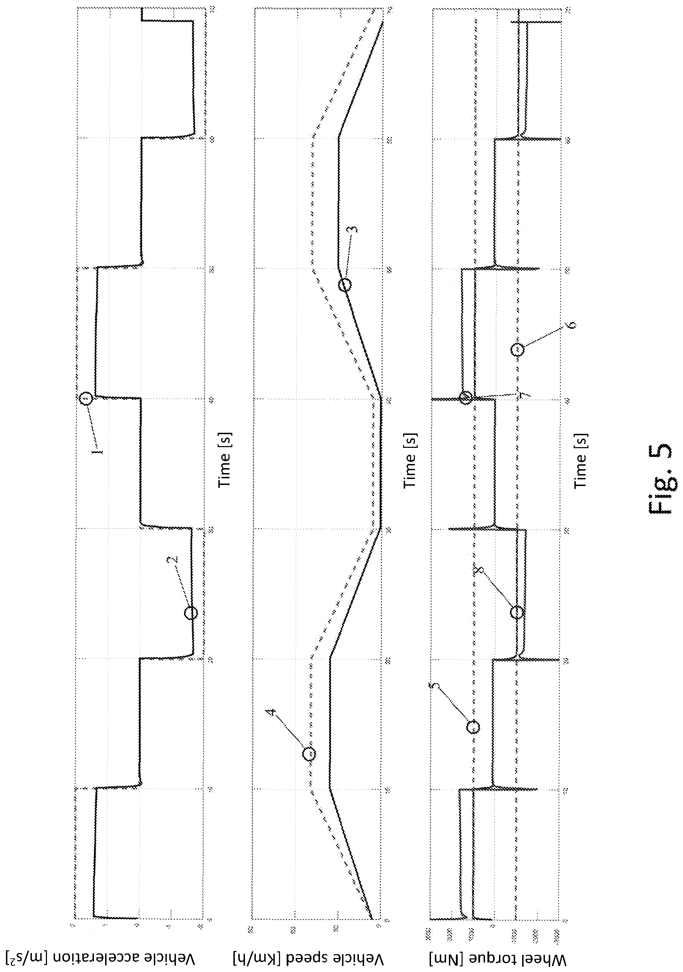

In particular, Figure 3 shows the block diagram of an automotive electronic control system for controlling the longitudinal dynamics of a motor vehicle comprising two nested control loops, an inner one with integral action for controlling the longitudinal acceleration of the motor vehicle, and an outer one without integral action, for example of proportional type, for controlling the longitudinal speed of the motor vehicle, and wherein the outer control loop for controlling the longitudinal speed of the motor vehicle receives a motor-vehicle longitudinal speed reference and outputs a longitudinal acceleration reference for the inner control loop for controlling the longitudinal acceleration of the motor vehicle. In particular, Figures 4, 5 and 6 concern the control of the longitudinal acceleration of the motor vehicle carried out by the inner control loop, in the cases where the anti-wind-up technique shown in Figure 2 is not implemented (Figure 4) and is instead implemented (Figure 5).

In particular, in Figure 4, the top graph relates to the longitudinal acceleration of the motor vehicle, wherein the dashed line referenced by reference numeral 1 depicts the requested longitudinal acceleration, while the continuous line referenced by reference numeral 2 depicts the measured longitudinal acceleration.

The central graph, instead, relates to the longitudinal speed of the motor vehicle, wherein the dashed line referenced by reference numeral 3 depicts the reference longitudinal speed that the motor vehicle would have if it were capable of instantly following the acceleration reference (the pure integral of the acceleration reference), while the continuous line referenced by reference numeral 4 depicts the measured longitudinal speed.

The two bottom graphs concern the motor-vehicle wheel torques (in the graph on the right, the y-axis - vertical axis orthogonal to the longitudinal one - has been limited so as to highlight the trend in the proximity of the saturation region), wherein the two dashed lines referenced by reference numerals 5 and 6, respectively, show the two maximum and minimum torque limits actuatable by the motor vehicle, while the two continuous lines referenced by reference numerals 7 and 8 show the torque request by the PI controller and the torque actually delivered to the wheels.

The acceleration reference is composed of a sequence of steps: in the first section, the reference is positive (+2 m/s$^2$), in the central section it is null (0 m/s$^2$) and in the final section it is negative (-2m/s$^2$). In terms of speed, what is determined is a typical trapezoidal trend. The sequence was repeated for two consecutive cycles.

In the case shown in Figure 4, no anti-wind-up system was activated. The profile of the accelerations in the first section of positive request (between 0 and 10 seconds) should be noted: the system is not capable of precisely following the request due to the positive saturation limit fixed at 1000 Nm. As it can be observed in the same section in the graph of the wheel torques, the request made by the controller exceeds by a factor 100 the maximum actuatable torque values. In this step, the wind-up phenomenon is well evident since the integrator continues to charge, thus accumulating an error which cannot be compensated due to the actuation limits.

When the acceleration request becomes null (section between 10 and 20 seconds) the integral action at this point starts its discharge step which lasts about 5 seconds, in all this section the measured longitudinal acceleration of the motor vehicle remains positive until the discharge of the integral is complete and the request falls within the actuatable torque limits.

A similar case occurs in the section of negative acceleration request between 20 and 30 seconds. Also in this case, the request is such that it cannot be satisfied due to the lower actuatable torque limit equal to -1000 Nm. Similarly, the integral charges uselessly in all this saturation step and when the acceleration request becomes once again null (section between 30 and 40 seconds) the system is not capable of promptly reacting because once again it has to wait for the discharge time of the integrator to return within the actuatable torque limits.

In conclusion, as shown in the example, the wind-up phenomenon causes delays in the precise following of the acceleration reference due to the discharge time of the integral. If such a situation should ever occur in a real context, it would cause considerable risks, which is the case for example of the drive assistance system for maintaining the safety distance from the motor vehicle in front. In that case, a non-management of the wind-up phenomenon could cause a rear-end collision.

Figure 5 shows the time developments of the same automotive quantities shown in the graphs of Figure 4, wherein the anti-wind-up system was instead enabled in back-computation configuration and the acceleration reference is the same.

As it can be observed in the first section where the acceleration reference is positive (between 0 and 10 seconds), similarly to what is shown in Figure 4, the system is not capable of reaching the reference due to the actuation limits. However, contrarily to what is shown in Figure 4, even if the request of the controller exceeds the positive torque limit value of 1000 Nm, the integrator tends to charge with a much slower dynamics due to the anti-wind-up effect which tries to limit the error accumulation due to the fact that the system is not capable of reaching the reference due to the actuation limits.

In fact, when in the second section the reference then becomes null (between 10 and 20 seconds), the system is capable of promptly reacting coming to the requested acceleration value, which is evident also observing the profile of the speeds. The explanation lies in the fact that the discharge effect of the integrator was contained due to the anti-wind-up action.

The same type of analysis can be repeated for the section of negative reference.

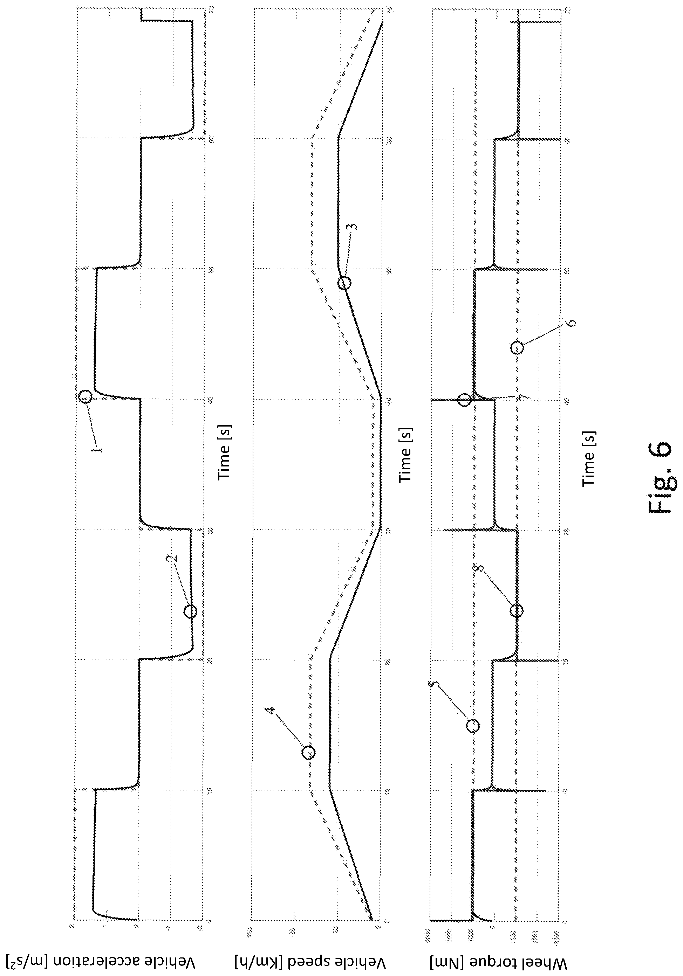

Figure 6 shows the time developments of the same automotive shown in the graphs of Figure 5, wherein the anti-wind-up system was enabled in back-computation configuration and the acceleration reference is the same, with the difference that the proportional gain of the anti-wind-up was increased by a factor 10 with respect to the one used in the simulation shown in Figure 5.

In terms of response and of following of the acceleration reference by the system, there are no particular differences to be noted. What is evident is the trend of the torque requested by the controller. In this case, during the saturation step, due to a greater invasiveness of the anti-wind-up system, the charge effect of the integrator is almost totally partialised.

Hence, if the proportional gain of the anti-wind up is calibrated too "softly", as in the case illustrated in Figure 5, the risk is to anyway have wind-up phenomena if exposed to a saturation condition for too long. On the contrary, if the proportional gain of the anti-wind-up is calibrated too aggressively, the risk is to obtain the opposite effect and thus to trigger instabilities.

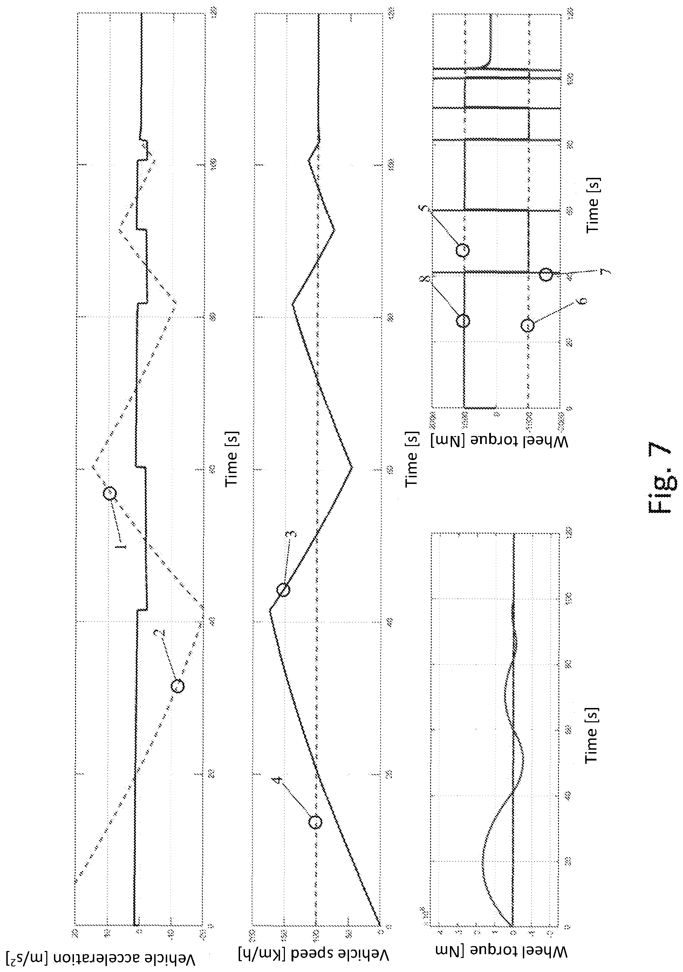

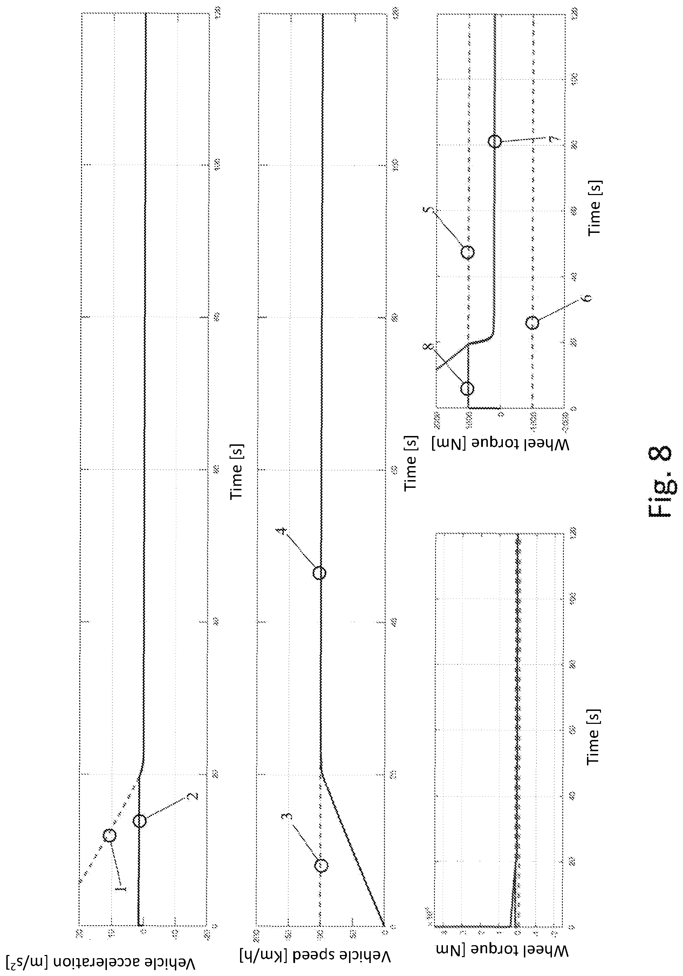

Figures 7 and 8 concern the control of the longitudinal speed of the motor vehicle carried out by the outer control loop, where the anti-wind-up technique shown in Figure 2 is not implemented (Figure 7) and is instead implemented (Figure 8).

In particular, Figure 7 relates again to the case where the anti-wind-up system has been deactivated and it is intended to follow a speed reference fixed at 100 Km/h (Cruise Control). In this case, the acceleration reference is outputted by the outer control loop of the longitudinal speed of the motor vehicle.

In the initial instants, the outer speed control requires an acceleration reference above 20 m/s$^2$, which clearly cannot be satisfied by the more inner control in acceleration due to the saturation limits as mentioned in the foregoing. In the absence of anti-wind-up, the integrator charges for the entire saturation section. As the motor vehicle approaches the target of 100 Km/h, the acceleration reference decreases and thus becomes negative when the target is exceeded (between 20 and 50 seconds). In this step, the wind-up phenomenon is evident, since the control in acceleration does not manage to promptly react to the reference change due to the discharge time of the integrator and therefore the motor vehicle, instead of setting at the reference speed, continues to gain speed until reaching a peak of about 170 Km/h around 43 seconds. At that point, the speed of the motor vehicle decreases and the cycle repeats for the case of reference in negative acceleration.

In other words, the wind-up phenomenon destabilised the outer control in speed which attempts to react to the over-shoots caused by the charge and discharge effects of the integrator and at the same time powers the wind-up phenomenon requiring acceleration values not actuatable by the system. The motor vehicle manages to stabilise itself only after more than 100 seconds from the beginning of the manoeuvre.

Figure 8 shows the time developments of the same automotive quantities shown in the graphs of Figure 7, where the anti-wind-up system was enabled in back-computation configuration and the acceleration reference is the same.

As it can be seen, in the initial instants, the outer speed control requires an acceleration reference above 20 m/s$^2$, which clearly cannot be satisfied by the inner control in acceleration due to the saturation limits as mentioned in the foregoing. In this saturation step, the anti-wind-up system limits the charge of the integrator. When the motor vehicle approaches the speed of 100 Km/h, the acceleration reference decreases and the inner control in acceleration promptly manages to react allowing the outer speed control to reach the required speed target without oscillations in a little over 20 seconds.

US 2020/341442 A1 discloses an adaptive anti-wind-up protection method for a control system with cascaded inner and outer control loops. The method comprises receiving an outer loop feedback signal indicative of the response of a plant controlled by the outer control loop and calculating an inner control loop request such that, it would cause saturation of the control device controlled by the inner control loop; converting the calculated inner loop request to outer loop anti-windup request limits using kinematic relationships and transmitting the outer loop anti-windup request limits to a controller of the outer control loop; applying the outer loop anti-windup request limits to a controller of the outer control loop to limit the inner loop request generated thereby; and executing an outer control loop control law and an inner control loop control law subject to the anti-windup request limits.

US 2019/292998 A1 discloses a method for determining a manipulated variable for adjusting an intake manifold pressure in an internal combustion engine on the basis of a target intake manifold pressure, whereby the target intake manifold pressure is corrected as a function of a limit value of the manipulated variable and/or as a function of a variable that has been influenced by the limit value of the manipulated variable.

The article "A Dual Closed-loop Longitudinal Speed Controller Using Smooth Feedforward and Fuzzy Logic for Autonomous Driving Vehicles" by Zhan Junxiang et al., in PROCEEDINGS OF THE 2021 IEEE iNTERNATIONAL INTELLIGENT TRANSPORTATION SYSTEMS CONFERENCE (ITSC), 19 September 2021, pages 545-552, DOI: 10.1109/ ITSC48978.2021.9564479 discloses a dual closed-loop longitudinal speed controller.

## OBJECT AND SUMMARY OF THE INVENTION

This numerical simulation allowed the Applicant to verify that the third anti-wind-up technique with back-computation of the integral action shown in Figure 2 requires for the time constant $T_t$ to be calibrated to cause the integral action to be not totally discharged, since this could cause instabilities, but at the same time it has to be capable of making effective the anti-wind-up action adapting as quickly as possible to the sudden reference changes.

The Applicant also had the possibility to verify that in the third anti-wind-up technique with back-computation of the integral action shown in Figure 2, despite a good calibration of the time constant $T_t$, it is anyway very difficult to make the output u(t) of the controller, which constitutes the input or the command of the actuator, to perfectly fall within the linearity region of the actuator. This could not entail big problems (unless there are delays) in the case of a system stable by nature, on the contrary if the control has to also fulfil the task of stabilising the system this could compromise the stabilisation action.

Furthermore, the third anti-wind-up technique with back-computation of the integral action shown in Figure 2 has a limited applicability range since it results applicable only to integral controllers, *i.e.,* only to PID or PI controllers.

The object of the present invention is thus to provide an innovative anti-wind-up technique for an automotive electronic control system for controlling longitudinal dynamics of a motor vehicle which allows the above-mentioned drawbacks to be overcome.

According to the present invention, an automotive electronic longitudinal dynamics control system is provided, as claimed in the appended claims.

## BRIEF DESCRIPTION OF THE DRAWINGS

Figure 1 shows a block diagram of a classic automatic PID electronic control system.
Figure 2 shows a block diagram of an anti-wind-up technique with back-computation of the integral term in a PID controller.
Figure 3 shows a block diagram of an application of an automatic electronic control system in an automotive context for controlling the longitudinal dynamics of a motor vehicle with two nested control loops.
Figures 4, 5, 6, 7 and 8 show time developments of automotive quantities obtained through a numerical simulation of the block diagram shown in Figure 1.
Figure 9 shows a block diagram of an anti-wind-up technique with reference resolver according to the present invention.
Figures 10 to 13 show time developments of automotive quantities obtained through a numerical simulation of the block diagram shown in Figure 9.

### DESCRIPTION OF PREFERRED EMBODIMENTS OF THE INVENTION

The present invention will now be described in detail with reference to the accompanying figures in order to enable a person skilled in the art to manufacture it and use it. Various modifications to the described embodiments will be immediately evident to those skilled in the art and the general principles described can be applied to other embodiments and applications without thereby departing from the scope of protection of the present invention, as defined in the appended claims. Therefore, the present invention is not be considered limited to the described and illustrated embodiments, but it must be granted the broadest scope of protection in line with the described and claimed features.

Unless defined otherwise, all the technical and scientific terms used herein have the same meaning commonly used by persons of ordinary skill in the relevant field of the present invention. In the event of conflict, the present description, comprising the provided definitions, will be binding. Furthermore, the examples are provided for the purposes of illustration only and as such are not to be considered limiting.

In particular, the block diagrams included in the accompanying figures and described in the following are not to be understood as representation of the structural features, i.e. constructive limitations, but must be interpreted as representation of functional features, i.e. properties intrinsic to the devices and defined by the effects obtained, i.e. functional limitations, and which can be implemented in different manners so as to thus safeguard the functionalities of the same (its ability to function).

In order to facilitate the comprehension of the embodiments described herein, reference will be made to some specific embodiments and a specific language will be used to describe the same. The terminology used in the present document is only intended to describe particular embodiments and is not intended to limit the scope of the present invention.

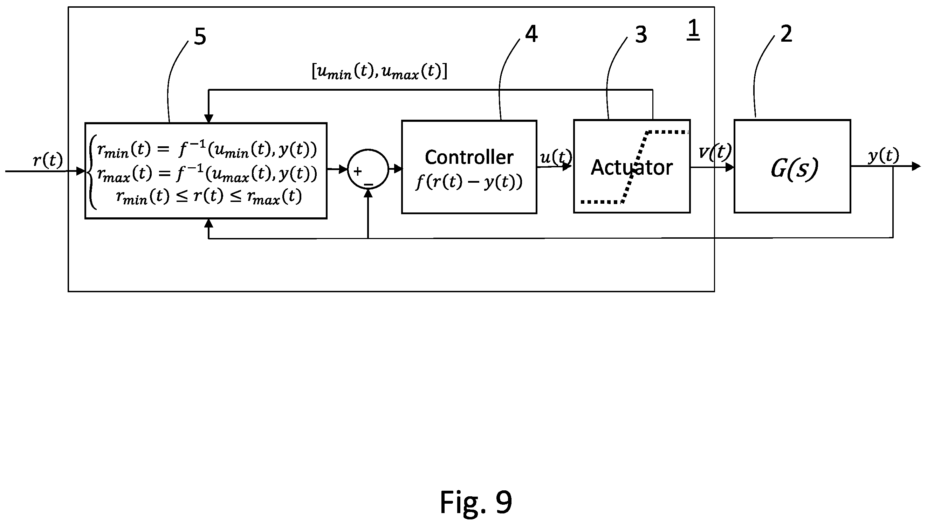

The idea underlying the innovative anti-wind-up technique according to the present invention, which for reasons that will appear clearer in the following may be referred to as anti-wind-up technique with reference resolver, is shown in Figure 9.

In particular, Figure 9 shows the block diagram of an automatic electronic control system, referenced as a whole by reference numeral **1,** for closed-loop controlling a dynamic system to be controlled, referenced by reference numeral **2.**

The automatic electronic control system **1** comprises an actuator **3** designed to control the dynamic system **2,** and a controller **4** designed to control the actuator **4** based on a control law $f(e(t)$, for example PID.

The automatic closed-loop electronic control system **1** is further designed to implement an anti-wind-up system with reference resolver according to the present invention, shown in Figure 8 with the block referenced by reference numeral **5.**

In a nutshell, instead of acting on the integral action by subtracting the error between the output and the input of the actuator, as provided for in the third anti-wind-up technique with back-computation of the integral action shown in Figure 2, the anti-wind-up system **5** with reference resolver provides instead for intervening on the reference $r(t)$ based on which the error $e(t)$ inputted to the controller is computed, by limiting the excursion thereof within a range such to cause the actuator to operate in the linear section of its input/output characteristic.

By knowing the minimum and maximum values $u_{min}(t)$ and $u_{max}(t)$ that the output $u(t)$ of the controller **4** should assume to cause the actuator **3** to operate in its linearity range, i.e., in the linear section of its input/output characteristic, i.e., its output $v(t)$ does not exceed the minimum and maximum saturation limits $v_{min}(t)$ and $v_{max}(t)$, and by knowing the control law $f(e(t))$ implemented by the controller **4** to generate the output $u(t)$, applying an inverse transformation of the control law $f(e(t))$, it is possible to compute the minimum and maximum excursion limits $r_{min}(t)$ and $r_{max}(t)$ of the reference $r(t)$ that prevent the output $u(t)$ of the controller **4** from exceeding the minimum and maximum values $u_{min}(t)$ and $u_{max}(t)$ and, consequently, that enable the actuator **3** to operate always in its linearity range, i.e., in the linear section of its input/output characteristic, where its output $v(t)$ does not exceed the minimum and maximum saturation limits $v_{min}(t)$ and $v_{max}(t)$, i.e.:

$$u(t) = f(r(t) - y(t)) \ \rightarrow \ r_{min}(t) \leq r(t) \leq r_{max}(t) : \begin{cases} r_{min}(t) = f^{-1}(u_{min}(t), y(t)) \\ r_{max}(t) = f^{-1}(u_{max}(t), y(t)) \end{cases}$$

In particular, by knowing the minimum and maximum saturation limits $v_{min}(t)$ and $v_{max}(t)$ of the actuator **3,** the minimum and maximum values $u_{min}(t)$ and $u_{max}(t)$ that the output $u(t)$ of the controller **4** has to assume in order for the actuator **3** to operate in its linearity range, i.e., in the linear section of its input/output characteristic, i.e., for the output $v(t)$ thereof not to exceed the minimum and maximum saturation limits $v_{min}(t)$ and $v_{max}(t)$, can be determined in various ways, for example based on the input/output characteristic of the actuator **3** indicated on the datasheet thereof, or they can be fedback by the actuator **3** or still they may be determined by characterising the actuator **3** in an open-loop configuration.

By way of mere example, applying the anti-wind-up technique according to the present invention to a PI controller, the maximum excursion limit $r_{max}(t)$ of the reference $r(t)$ may be computed as follows:

$$K_{p,0}\left(r_{x,0} - y_{m,0}\right) + K_{i,0}T_s\left(r_{x,0} - y_{m,0}\right) \leq u_0^{max}$$

**step 0)**

$$r_{x,0} \leq \frac{u_0^{max} + y_{m,0}(K_{p,0} + K_{i,0}T_s)}{(K_{p,0} + K_{i,0}T_s)}$$

**step 1)**

$$K_{p,1}\left(r_{x,1} - y_{m,1}\right) + K_{i,1}T_s\left(r_{x,1} - y_{m,1}\right) + K_{i,1}T_s e_0 \leq u_1^{max}$$

$$r_{x,1} \leq \frac{u_1^{max} + y_{m,1}\left(K_{p,1} + K_{i,1}T_s\right) - K_{i,0}T_s e_0}{(K_{p,1} + K_{i,1}T_s)}$$

$$K_{p,n}\left(r_{x,n} - y_{m,n}\right) + K_{i,n}T_s\left(r_{x,n} - y_{m,n}\right) + T_s \sum_{j=n-1}^{0} K_{i,j}e_j \leq u_n^{max}$$

**step n)**

$$r_{x,n} \leq \frac{u_n^{max} + y_{m,n}\left(K_{p,1} + K_{i,1}T_s\right) - T_s \sum_{0}^{j=n-1} K_{i,j}e_j}{(K_{p,n} + K_{i,n}T_s)}$$

The minimum excursion limit $r_{min}(t)$ of the reference $r(t)$ may instead be computed as follows:

$$K_{p,n}\left(r_{x,n} - y_{m,n}\right) + K_{i,n}T_s\left(r_{x,n} - y_{m,n}\right) + T_s \sum_{j=n-1}^{0} K_{i,j}e_j \geq u_n^{min}$$

$$r_{x,n} \geq \frac{u_n^{min} + y_{m,n}\left(K_{p,1} + K_{i,1}T_s\right) - T_s \sum_{0}^{j=n-1} K_{i,j}e_j}{(K_{p,n} + K_{i,n}T_s)}$$

The anti-wind-up technique with reference resolver may be extended and generalised to any controller **4** expressed as transfer function and thus in its equivalent input/output form:

$$\frac{u(t)}{e(t)} = C(z^{-1}) = \frac{b_1 + b_2 z^{-1} + \dots + b_n z^{-n}}{1 + a_1 z^{-1} + \dots + a_m z^{-m}}$$

where the coefficients $b_j$ of the polynomial which represents the controller **4** are linearly dependent on the command and on the error made by the controlled system.

The preceding equation allows the control law to be expressed as:

$$u(t) = -a_1 u(t-1) - \dots - a_m u(t-m) + b_1 e(t) + b_2 e(t-1) + \dots + b_n e(t-n)$$

By applying what described in the foregoing, it follows that:

$$u_{max}(t) = -a_1 u(t-1) - \dots - a_m u(t-m) + b_1\left(r_{max}(t) - y(t)\right) + b_2 e(t-1) + \dots + b_n e(t-n)$$

$$u_{min}(t) = -a_1 u(t-1) - \dots - a_m u(t-m) + b_1\left(r_{min}(t) - y(t)\right) + b_2 e(t-1) + \dots + b_n e(t-n)$$

By inverting the above equations, the admissible minimum and maximum reference values $r_{min}(t)$ and $r_{max}(t)$ for the reference $r(t)$ may be computed as:

$$r_{max}(t) = u_{max}(t) + y(t) - \frac{-a_1 u(t-1) - \ldots - a_m u(t-m) + b_2 e(t-1) + \ldots + b_n e(t-n)}{b_1}$$

$$r_{max}(t) = u_{max}(t) + y(t) - \frac{-a_1 u(t-1) - \ldots - a_m u(t-m) + b_2 e(t-1) + \ldots + b_n e(t-n)}{b_1}$$

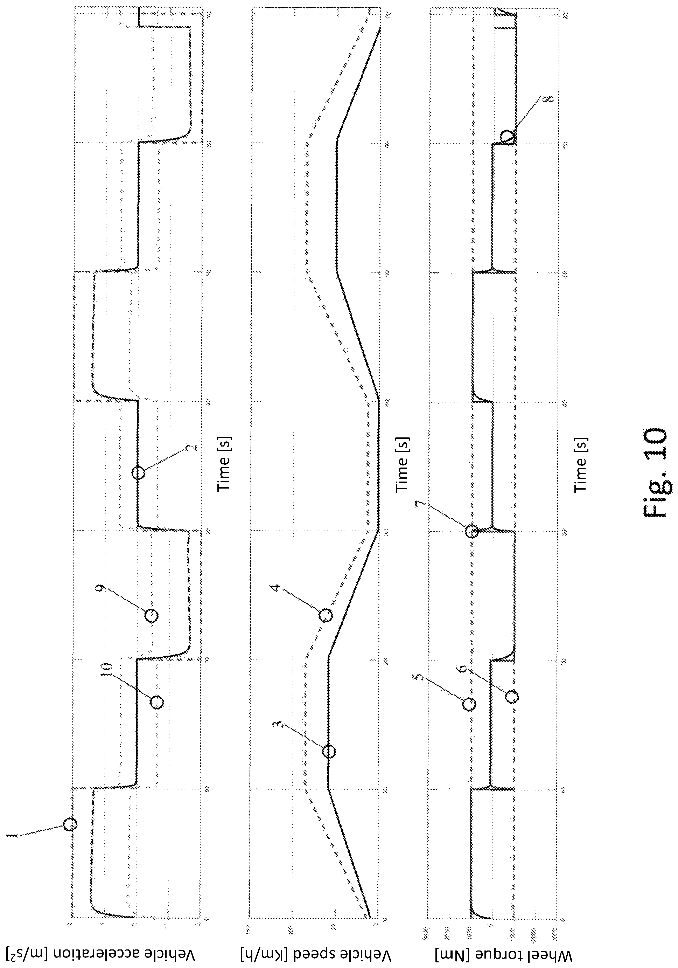

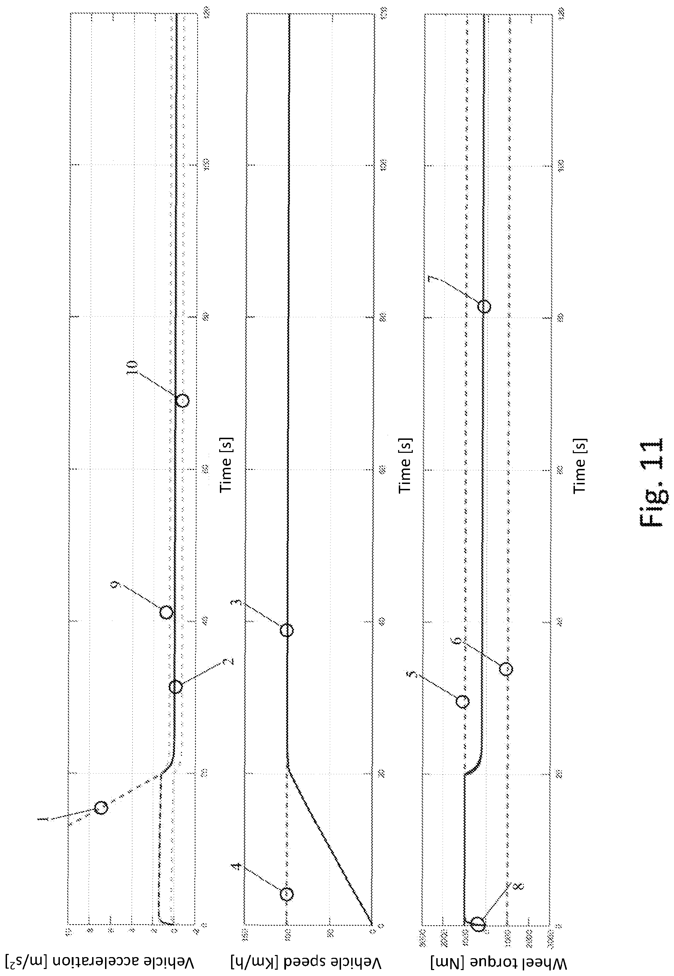

Figures 10 and 11 show the developments of the same automotive quantities shown in Figures 4 to 8 and obtained though a numerical simulation of the block diagram of the automatic electronic control system **1** implementing the anti-wind-up technique with reference resolver shown in Figure 9.

In particular, with reference to Figure 10, by comparing the graphs of the acceleration and speed with those shown in Figure 5, a development similar to the one shown in Figure 5 may be appreciated with a back-computation anti-wind-up system, *i.e.,* the system is capable of promptly reacting to the sudden reference changes in acceleration without highlighting possible delays caused by wind-up effects. In fact, as it can be observed in the graph of the wheel torques, the fact of constraining the acceleration reference into the maximum and minimum acceleration limits $r_{max}$ and $r_{min}$, referenced by reference numerals 9 and 10, respectively, results in an optimal request to the actuators by the controller: perfectly aligned with respect to the actuatable maximum and minimum torque limits.

As additional information, the designed anti-wind-up system is capable of providing the maximum and minimum acceleration limits $r_{max}$ and $r_{min}$ which, interestingly, dynamically adapt as a function of the system response and in the proximity of the saturation the system response tends to perfectly converge to the maximum value (or minimum value in the negative case). Therefore, the maximum and minimum acceleration limits $r_{max}$ and $r_{min}$ further carry out the task of providing a precise indication of the instantaneous potential of the system and the same information can be used in a more outer cycle (should it be present and should it contain integral actions) for managing a possible anti-wind-up logic.

With reference to Figure 11, by comparing the graphs of the acceleration and speed with those shown in Figures 6 and 7, it may be appreciated that in the first instants of time (between 0 and 10 seconds), the control in speed that does not manage any saturation constraint, requires an acceleration above 20 m/s$^2$. Clearly the reference cannot be accurately followed by the control in acceleration due to the evident limits of actuatable maximum torque. As it can be observed in the graph of the wheel torque, the request of the controller is perfectly saturated at the maximum torque value. In the same interval, in the graph of the acceleration, it may be appreciated that the maximum «potential» acceleration value is a little less than 2 m/s$^2$ and the actual acceleration of the motor vehicle converges on such value.

Thanks to the optimal management of the saturation by the anti-wind-up system, the control is capable of reaching the speed target of 100 Km/h in a little more than 20 seconds without any type of oscillation.

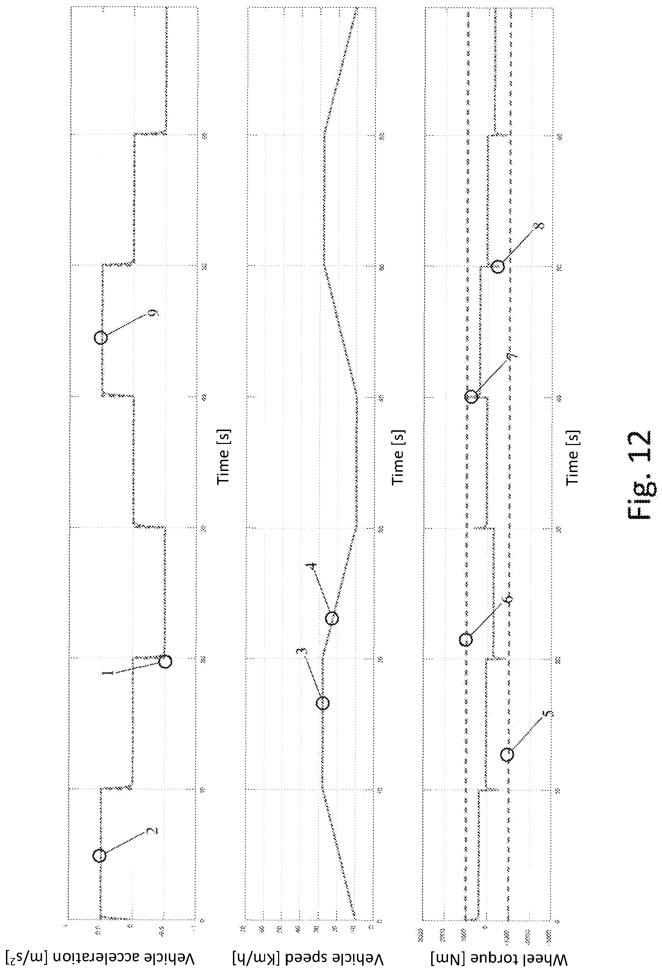

Figure 12 shows the graphs of the acceleration and speed obtained by using the anti-wind-up system with back-computation (referenced ad wind-up 2) and with reference resolver according to the present invention (referenced as wind-up 1). The acceleration reference is the sequence of positive and negative steps in the graphs shown in the previous Figures, with the sole difference that the maximum value is limited to an amplitude of 0.5 m/s$^2$.

As it may be appreciated in the graph of the acceleration, the system is capable of reaching the requested reference without any particular problems, furthermore by comparing the two responses obtained with the two anti-wind-up systems they are perfectly superimposable, this is valid also when observing the profile of the speeds. Also the outputs of the two controllers are perfectly coinciding and in this case they never reach the saturation region.

In conclusion, when the two anti-wind-up systems work within the saturation region of the actuators, the responses are perfectly equivalent, which means that the behaviour of the anti-wind-up system with reference resolver according to the present invention in this step is transparent as much as the anti-wind-up system in back-computation configuration.

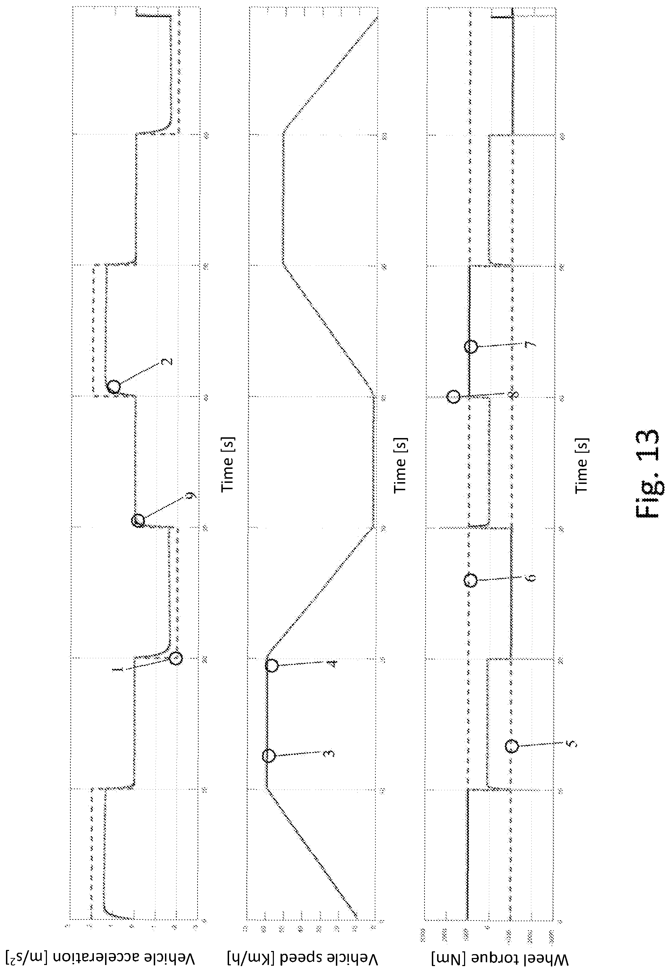

Figure 13 shows the graphs of the acceleration and speed which are similar to those shown in Figure 13 obtained by using the anti-wind-up system with back-computation (referenced as wind-up 2) and with reference resolver configuration according to the present invention (referenced as wind-up 1), with the difference that the acceleration reference is formed by a sequence of positive and negative steps whose maximum value was brought back to 2 m/s$^2$ for stimulating the effect of the saturation. In this case, the anti-wind-up system with back-computation was calibrated so as to provide its maximum performance.

By observing the developments in the acceleration graph between 0 and 10 seconds, it is again evident that the system is not capable of achieving the required acceleration target in both anti-wind-up configurations. In the graph of the torque requests, it is possible to simultaneously observe the operation of the two anti-wind-up systems: in that with back-computation it is possible to observe that in the initial instants the request exceeds with a peak the admissible torque request to then converge in the proximity of the limit value, on the contrary in that with reference resolver according to the present invention the request immediately sets at the limit value. This better reactivity and adaptivity of the torque request is inferable also in the acceleration responses: in fact, it is possible to note in the discontinuity regions of the reference that the response of the reference resolver configuration, even if not by much, sets more quickly at the reference value. By comparing the two speed profiles, no particular differences are noted.

Based on what described above, it may be appreciated that the anti-wind-up system with reference resolver reacts to reference variations better than the anti-wind-up system with back-computation.

Furthermore, the anti-wind-up system with reference resolver perfectly exploits all the maximum/minimum torque that can be requested to the actuators without ever exceeding the saturation limits, whereas the anti-wind-up system with back-computation exceeds the limit values especially in the transient step.

Furthermore, the anti-wind-up system with back-computation has to be suitably calibrated to ensure that the anti-wind-up action is at the same time effective and capable of not destabilising the system.

Furthermore, the anti-wind-up system with reference resolver provides information represented by the minimum and maximum reference values $r_{min}$ and $r_{max}$ as a function of the dynamics of the controlled system and of the saturation limits of the actuator and that can be exploited by higher level logics as limits of possible anti-wind-up interventions implemented by more outer cycles.

Furthermore, the anti-wind-up system with reference resolver carries out a precise and effective linearisation operation by perfectly limiting the action of the controller within the saturation limits imposed by the actuator and this advantage becomes even more crucial in the systems having an instable nature.

## Claims

1. An automotive electronic longitudinal dynamics control system configured to closed-loop control longitudinal dynamics of a motor vehicle (**2**) and comprising two nested control loops:

   - an inner control loop with integral action to control longitudinal acceleration ($y_{inner}(t)$) of the motor vehicle (**2**) and configured to receive a longitudinal acceleration reference ($r_{inner}(t)$) to be followed by the motor vehicle (**2**); and
   - an outer control loop without integral action, for example of a proportional type, to control longitudinal speed ($y_{outer}(t)$) of the motor vehicle (**2**) and configured to receive a longitudinal speed reference ($r_{outer}(t)$) and to output the longitudinal acceleration reference ($r_{inner}(t)$) for the inner control loop;

   wherein the inner loop is configured to implement an automatic electronic control system (**1**) configured to receive the longitudinal acceleration reference ($r_{inner}(t)$) and the longitudinal acceleration ($y_{inner}(t)$) of the motor vehicle (**2**) and to output an output ($v(t)$) to be supplied to the motor vehicle (**2**) to cause the longitudinal acceleration ($y_{inner}(t)$) thereof to follow the longitudinal acceleration reference ($r_{inner}(t)$);
   the automatic electronic control system (**1**) comprises an actuator (**3**) to control the motor vehicle (**2**), and a controller (**4**) to control the actuator (**4**) based on a control law ($f(e(t))$);
   the controller (**4**) is configured to receive a longitudinal acceleration error ($e_{inner}(t)$) indicative of a deviation of the longitudinal acceleration ($y_{inner}(t)$) of the motor vehicle (**2**) from the longitudinal acceleration reference ($r_{inner}(t)$) and to output, based on the longitudinal acceleration error ($e_{inner}(t)$) and on the control law ($f(e(t))$) implemented by the controller (**4**), an output ($u(t)$) to be supplied to the actuator (**3**) to cause it to control the motor vehicle (**2**) to cause the longitudinal acceleration ($y_{inner}(t)$) thereof to follow the longitudinal acceleration reference ($r_{inner}(t)$);
   the actuator (**3**) has an input/output characteristic with at least a linearity range delimited by minimum and maximum saturation limits ($v_{min}(t), v_{max}(t)$) and is configured to receive the output ($u(t)$) of the controller (**4**) and to output an output ($v(t)$) to be supplied to the motor vehicle (**2**) to cause the longitudinal acceleration ($y_{inner}(t)$) thereof to follow the longitudinal acceleration reference ($r_{inner}(t)$);
   the automatic electronic control system (**1**) is further configured to implement an anti-wind-up system (**5**) configured to cause an excursion of the longitudinal acceleration reference ($r_{inner}(t)$) to be limited within an excursion range ($r_{min}(t), r_{max}(t)$) to cause the actuator (**3**) to operate in a linearity range ($v_{min}(t), v_{max}(t)$) of its input/output characteristic;
   the anti-wind-up system (**5**) is further configured to compute the excursion range ($r_{min}(t), r_{max}(t)$) of the longitudinal acceleration reference ($r_{inner}(t)$) based on the linearity range ($v_{min}(t), v_{max}(t)$) of the actuator (**3**), on an inverse transform of the control law ($f(e(t))$ of the controller (**4**) and on the longitudinal acceleration ($y_{inner}(t)$) of the motor vehicle (**2**), so as to cause the output ($u(t)$) of the controller (**4**) to be within an excursion range ($u_{min}(t), u_{max}(t)$) to cause the actuator (**3**) to operate in the linearity range of its input/output characteristic.

2. The automatic electronic control system (**1**) of claim **1**, wherein the anti-wind-up system (**5**) is further configured to compute:

- the excursion range ($u_{min}(t)$ and $u_{max}(t)$) of the output ($u(t)$) of the controller (**4**) based on the linearity range ($v_{min}(t)$, $v_{max}(t)$) of the input/output characteristic of the actuator (**3**); and
- the excursion range ($r_{min}(t)$, $r_{max}(t)$) of the longitudinal acceleration reference ($r_{inner}(t)$) based on the excursion range of the output ($u(t)$) of the controller (**4**), on the inverse transform of the control law ($f(e(t))$) of the controller (**4**) and on the longitudinal acceleration ($y_{inner}(t)$) of the motor vehicle (**2**).

**3.** The automatic electronic control system (**1**) of claim **2**, wherein the anti-wind-up system (**5**) is further configured to compute:

- minimum and maximum values ($u_{min}(t)$, $u_{max}(t)$) which define the excursion range of the output ($u(t)$) of the controller (**4**) based on the minimum and maximum saturation limits ($v_{min}(t)$, $v_{max}(t)$) of the actuator (**3**);
- the minimum and maximum excursion limits ($r_{min}(t)$, $r_{max}(t)$) of the longitudinal acceleration reference ($r_{inner}(t)$) based on the minimum and maximum values ($u_{min}(t)$, $u_{max}(t)$) of the output ($u(t)$) of the controller (**4**), on the inverse transform of the control law ($f(e(t))$) of the controller (**4**) and on the longitudinal acceleration ($y_{inner}(t)$) of the motor vehicle (**2**).

**Patentansprüche**

**1.** Elektronisches Automobil-Längsdynamik-Regelsystem, das konfiguriert ist, um die Längsdynamik eines Kraftfahrzeugs (**2**) im geschlossenen Regelkreis zu regeln und zwei verschachtelte Regelschlaufen umfasst:

- eine innere Regelschlaufe mit integraler Aktion zur Regelung der Längsbeschleunigung ($Y_{innen}(t)$) des Kraftfahrzeugs (**2**) und konfiguriert, um eine Längsbeschleunigungsreferenz ($r_{innen}(t)$) zu empfangen, der das Kraftfahrzeug (**2**) folgen soll; und
- eine äußere Regelschlaufe ohne integrale Aktion, beispielsweise vom proportionalen Typ, zur Regelung der Längsgeschwindigkeit ($y_{außen}(t)$) des Kraftfahrzeugs (**2**) und konfiguriert, um eine Längsbeschleunigungsreferenz ($r_{außen}(t)$) zu empfangen und die Längsbeschleunigungsreferenz ($r_{innen}(t)$) für die innere Regelschlaufe auszugeben;
wobei die innere Schleife konfiguriert ist, um ein automatisches elektronisches Regelsystem (**1**) zu implementieren, das konfiguriert ist, um die Längsbeschleunigungsreferenz ($r_{innen}(t)$) und die Längsbeschleunigung ($y_{innen}(t)$) des Kraftfahrzeugs (**2**) zu empfangen und eine Ausgabe ($v(t)$) auszugeben, die dem Kraftfahrzeug (**2**) zugeführt werden soll, um zu bewirken, dass die Längsbeschleunigung ($y_{innen}(t)$) davon der Längsbeschleunigungsreferenz ($r_{innen}(t)$) folgt;
das automatische elektronische Regelsystem (**1**) umfasst einen Aktor (**3**) zur Regelung des Kraftfahrzeugs (**2**) und einen Regler (**4**) zur Regelung des Aktors (**4**) auf Grundlage eines Regelgesetzes ($f(e(t))$);
der Regler (**4**) ist konfiguriert, um einen Längsbeschleunigungsfehler ($e_{innen}(t)$), der auf eine Abweichung der Längsbeschleunigung ($y_{innen}(t)$) des Kraftfahrzeugs (**2**) von der Längsbeschleunigungsreferenz ($r_{innen}(t)$) hinweist, zu empfangen und auf Grundlage des Längsbeschleunigungsfehlers ($e_{innen}(t)$) und des vom Regler (**4**) implementierten Regelgesetzes ($f(e(t))$) eine Ausgabe ($u(t)$) auszugeben, die dem Aktor (**3**) zugeführt werden soll, um ihn zur Regelung des Kraftfahrzeugs (**2**) zu veranlassen, um zu bewirken, dass die Längsbeschleunigung ($Y_{innen}(t)$) davon der Längsbeschleunigungsreferenz ($r_{innen}(t)$) folgt;
der Aktor (**3**) weist eine Eingangs-/Ausgangskennlinie mit mindestens einem Linearitätsbereich auf, der durch minimale und maximale Sättigungsgrenze ($V_{min}(t)$, $V_{max}(t)$) begrenzt ist, und ist konfiguriert, um die Ausgabe ($u(t)$) des Reglers (**4**) zu empfangen und eine Ausgabe ($v(t)$) auszugeben, die dem Kraftfahrzeug (**2**) zugeführt werden soll, um zu bewirken, dass die Längsbeschleunigung ($Y_{innen}(t)$) davon der Längsbeschleunigungsreferenz ($r_{innen}(t)$) folgt;
das automatische elektronische Regelsystem (**1**) ist ferner so konfiguriert, dass es ein Anti-Wind-up-System (**5**) implementiert, das konfiguriert ist, um zu bewirken, dass eine Auslenkung der Längsbeschleunigungsreferenz ($r_{innen}(t)$) innerhalb eines Auslenkungsbereichs ($r_{min}(t)$, $r_{max}(t)$) begrenzt wird, um zu bewirken, dass der Aktor (**3**) in einem Linearitätsbereich ($V_{min}(t)$, $V_{max}(t)$) seiner Eingangs-/Ausgangskennlinie arbeitet;
das Anti-Wind-up-System (**5**) ist ferner so konfiguriert, dass es den Auslenkungsbereich ($r_{min}(t)$, $r_{max}(t)$) der Längsbeschleunigungsreferenz ($r_{innen}(t)$) basierend auf dem Linearitätsbereich ($V_{min}(t)$, $V_{max}(t)$) des Aktors (**3**), auf einer inversen Transformation des Regelgesetzes ($f(e(t))$) des Reglers (**4**) und auf der Längsbeschleunigung ($y_{innen}(t)$) des Kraftfahrzeugs (**2**) berechnet, um zu bewirken, dass die Ausgabe ($u(t)$) des Reglers (**4**) innerhalb eines Auslenkungsbereichs ($U_{min}(t)$, $U_{max}(t)$) liegt, um zu bewirken, dass der Aktor (**3**) im Linearitätsbereich seiner Eingangs/Ausgangskennlinie arbeitet.

2. Automatisches elektronisches Regelsystem (**1**) nach Anspruch **1,** wobei das Anti-Wind-Up-System (**5**) ferner dazu konfiguriert ist, Folgendes zu berechnen:

- den Auslenkungsbereich ($U_{min}(t)$ und $U_{max}(t)$) der Ausgabe ($u(t)$) des Reglers (**4**) basierend auf dem Linearitätsbereich ($V_{min}(t)$, $V_{max}(t)$) der Eingangs-/Ausgangskennlinie des Aktors (**3**); und
- den Auslenkungsbereich ($r_{min}(t)$, $r_{max}(t)$) der Längsbeschleunigungsreferenz ($r_{innen}(t)$) basierend auf dem Auslenkungsbereich der Ausgabe ($u(t)$) des Reglers (**4**), auf der inversen Transformation des Regelgesetzes ($f(e(t))$ des Reglers (**4**) und auf der Längsbeschleunigung ($y_{innen}(t)$) des Kraftfahrzeugs (**2**).

3. Automatisches elektronisches Regelsystem (**1**) nach Anspruch **2,** wobei das Anti-Wind-Up-System (**5**) ferner dazu konfiguriert ist, Folgendes zu berechnen:

- den minimalen und maximalen Wert ($U_{min}(t)$, $U_{max}(t)$), die den Auslenkungsbereich der Ausgabe ($u(t)$) des Reglers (**4**) basierend auf der minimalen und maximalen Sättigungsgrenze ($V_{min}(t)$, $V_{max}(t)$) des Aktors (**3**) definieren;
- die minimale und maximale Auslenkungsgrenze ($r_{min}(t)$, $r_{max}(t)$) der Längsbeschleunigungsreferenz ($r_{innen}(t)$) basierend auf dem minimalen und maximalen Wert ($U_{min}(t)$, $U_{max}(t)$) der Ausgabe ($u(t)$) des Reglers (**4**), auf der inversen Transformation des Regelgesetzes ($f(e(t))$ des Reglers (**4**) und auf der Längsbeschleunigung (($y_{innen}(t)$) des Kraftfahrzeugs (**2**).

## Revendications

1. Système de commande électronique de la dynamique longitudinale d'une automobile, configuré pour commander en boucle fermée la dynamique longitudinale d'un véhicule automobile (**2**) et comprenant deux boucles de commande imbriquées :

- une boucle de commande interne à action intégrale pour commander l'accélération longitudinale ($y_{inner}(t)$) du véhicule automobile (**2**) et configurée pour recevoir une référence d'accélération longitudinale ($r_{inner}(t)$) à suivre par le véhicule automobile (**2**) ; et
- une boucle de commande externe sans action intégrale, par exemple de type proportionnel, pour commander la vitesse longitudinale ($y_{outer}(t)$) du véhicule automobile (**2**) et configurée pour recevoir une référence de vitesse longitudinale ($r_{outer}(t)$) et pour délivrer la référence d'accélération longitudinale ($r_{inner}(t)$) pour la boucle de commande interne ;
la boucle intérieure étant configurée pour mettre en œuvre un système de commande électronique automatique (**1**) configuré pour recevoir la référence d'accélération longitudinale ($r_{inner}(t)$) et l'accélération longitudinale ($y_{inner}(t)$) du véhicule automobile (**2**) et pour délivrer une sortie ($v(t)$) à fournir au véhicule automobile (**2**) pour que l'accélération longitudinale ($y_{inner}(t)$) de celui-ci suive la référence d'accélération longitudinale ($r_{inner}(t)$) ;
le système de commande électronique automatique (**1**) comprend un actionneur (**3**) pour commander le véhicule automobile (**2**), et une commande (**4**) pour commander l'actionneur (**4**) sur la base d'une loi de commande ($f(e(t))$ ;
la commande (**4**) est configurée pour recevoir une erreur d'accélération longitudinale ($e_{inner}(t)$) indiquant un écart de l'accélération longitudinale ($y_{inner}(t)$) du véhicule automobile (**2**) par rapport à la référence d'accélération longitudinale ($r_{inner}(t)$) et pour délivrer, sur la base de l'erreur d'accélération longitudinale ($e_{inner}(t)$) et de la loi de commande ($f(e(t))$ mise en œuvre par la commande (**4**), une sortie ($u(t)$) à fournir à l'actionneur (**3**) pour l'amener à commander le véhicule automobile (**2**) afin que son accélération longitudinale ($y_{inner}(t)$) suive la référence d'accélération longitudinale ($r_{inner}(t)$) ;
l'actionneur (**3**) présente une caractéristique d'entrée/sortie avec au moins une plage de linéarité délimitée par des limites de saturation minimale et maximale ($V_{min}(t)$, $V_{max}(t)$) et est configuré pour recevoir la sortie ($u(t)$) de la commande (**4**) et pour délivrer une sortie ($v(t)$) à fournir au véhicule automobile (**2**) pour faire en sorte que l'accélération longitudinale ($y_{inner}(t)$) de celui-ci suive la référence d'accélération longitudinale ($r_{inner}(t)$) ;
le système de commande électronique automatique (**1**) est en outre configuré pour mettre en œuvre un système anti-windup (**5**) configuré pour limiter une excursion de la référence d'accélération longitudinale ($r_{inner}(t)$) dans une plage d'excursion ($r_{min}(t)$, $r_{max}(t)$) pour provoquer le fonctionnement de l'actionneur (**3**) dans une plage de linéarité ($V_{min}(t)$, $V_{max}(t)$) de sa caractéristique d'entrée/sortie ;
Le système anti-windup (**5**) est en outre configuré pour calculer la plage d'excursion ($r_{min}(t)$, $r_{max}(t)$) de la référence d'accélération longitudinale ($r_{inner}(t)$) sur la base de la plage de linéarité ($V_{min}(t)$, $V_{max}(t)$) de l'actionneur (**3**), sur une transformée inverse de la loi de commande ($f(e(t))$ de la commande (**4**) et sur l'accélération longitudinale ($y_{inner}(t)$) du véhicule automobile (**2**), de manière à amener la sortie ($u(t)$) de la commande (**4**) à se situer dans une plage d'excursion ($U_{min}(t)$, $U_{max}(t)$) pour provoquer le fonctionnement de l'actionneur (**3**) dans la plage de linéarité de sa caractéristique d'entrée/sortie.

2. Système de commande électronique automatique (**1**) selon la revendication **1**, le système anti-windup (**5**) étant en outre configuré pour calculer :

- la plage d'excursion ($U_{min}(t)$ et $U_{max}(t)$) de la sortie (*u(t)*) de la commande (**4**) sur la base de la plage de linéarité ($V_{min}(t)$, $V_{max}(t)$) de la caractéristique d'entrée/sortie de l'actionneur (**3**) ; et
- la plage d'excursion ($r_{min}(t)$, $r_{max}(t)$) de la référence d'accélération longitudinale ($r_{inner}(t)$) sur la base de la plage d'excursion de la sortie (*u(t)*) de la commande (**4**), sur la transformée inverse de la loi de commande (*f(e(t)*) de la commande (**4**) et de l'accélération longitudinale ($y_{inner}(t)$) du véhicule automobile (**2**).

3. Système de commande électronique automatique (**1**) selon la revendication **2,** le système anti-windup (**5**) étant en outre configuré pour calculer :

- les valeurs minimale et maximale ($U_{min}(t)$, $U_{max}(t)$) qui définissent la plage d'excursion de la sortie (*u(t)*) de la commande (**4**) sur la base des limites de saturation minimale et maximale ($V_{min}(t)$, $V_{max}(t)$) de l'actionneur (**3**) ;
- les limites d'excursion minimale et maximale ($r_{min}(t)$, $r_{max}(t)$) de la référence d'accélération longitudinale ($r_{inner}(t)$) sur la base des valeurs minimale et maximale ($U_{min}(t)$, $U_{max}(t)$) de la sortie (*u(t)*) de la commande (**4**), sur la transformée inverse de la loi de commande (*f(e(t)*) de la commande (**4**) et de l'accélération longitudinale ($y_{inner}(t)$) du véhicule automobile (**2**).

Fig. 1

Fig. 2

EP 4 409 365 B1

**Vehicle Plant**

$C_{outer}(s)$: outer loop controller
$C_{inner}(s)$: inner loop controller
$G_a(s)$: vehicle actuators
(engine and braking system)
$G_P(s)$: vehicle plant representative
    of the longitudinal dynamics

$r_{outer}$: speed reference
$e_{outer}$: speed error
$e_{inner}$: acceleration error
$y_{inner}$: vehicle acceleration
$y_{outer}$: vehicle speed

Fig. 3

Fig. 4

Fig. 5

Fig. 6

EP 4 409 365 B1

Fig. 7

Fig. 8

Fig. 9

Fig. 10

Fig. 11

EP 4 409 365 B1

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102021000025079
- US 2020341442 A1
- US 2019292998 A1

**Non-patent literature cited in the description**

- **ZHAN JUNXIANG et al.** A Dual Closed-loop Longitudinal Speed Controller Using Smooth Feedforward and Fuzzy Logic for Autonomous Driving Vehicles. *PROCEEDINGS OF THE 2021 IEEE iNTERNATIONAL INTELLIGENT TRANSPORTATION SYSTEMS CONFERENCE (ITSC)*, 19 September 2021, 545-552